# EUROPEAN PATENT SPECIFICATION

(11) **EP 0 489 402 B1**
(45) Date of publication and mention of the grant of the patent: **20.04.1994**
(21) Application number: 91120763.7
(22) Date of filing: 03.12.1991
(51) Int. Cl.: A23F 5/18

(54) **Process for preparing soluble coffee with improved flavour**
Verfahren zur Herstellung von löslichem Kaffee mit verbessertem Aroma
Procédé de préparation de café soluble avec un arôme amélioré

(30) Priority: 03.12.1990 DE 4038525
(43) Date of publication of application: 10.06.1992
(73) Proprietor: Jacobs Suchard AG, CH-8034 Zürich (CH)
(72) Inventor: Vitzthum, Otto G., Dr., W-2800 Bremen 33 (DE); Koch, Klaus Dieter, W-2800 Bremen 1 (DE)
(74) Representative: Abitz, Walter, Dr.-Ing.

(56) References cited:
- EP-A- 0 078 121
- DE-A- 2 638 383
- GB-A- 2 014 425
- US-A- 4 246 291
- FOOD TECHNOLOGY. vol. 24, November 1970, CHICAGO US pages 1282 - 1286; W.SCHULTZ ET AL.: 'Liquid Carbon Dioxide for Selective Aroma Extraction'

## Description

### Process for preparing soluble coffee with improved flavour

The disadvantages of many commercially available instant coffees are undesired process-related off-flavour characters, which give the coffee a malty, yeasty aroma character. This differentiates it clearly from a roast coffee brew and is the reason for the reduced acceptance of most instant coffees by the consumer.

Such off-flavour substances can form during the preparation process of the instant coffee if the roast coffee used for extraction remains in the percolator for too long under increased temperatures, if suitable precautions are not taken for the careful separation of the aroma fraction and, in the case of downstream part-extraction stages - the so-called secondary and tertiary extraction - more severe extraction conditions are applied.

There have been many attempts to reduce or eliminate undesired flavour-impairing off-flavour substances. Thus, EP-A-O 151 772 (Bonne and Schweinfuth) describes a process with which the off-flavour substances of the secondary extract are bonded to weakly basic ion exchangers. EP-A-O 078 618 (Hamell, Zanno and Hickernell) proposes adsorption onto polymeric resins in order to extract the raw, bitter and metallic characters from instant coffee. In US-A-4 544 567 (Gottesman), the removal using coffee oil and in EP-A-78121 (Turek) the removal using an edible oil is recommended and according to EP-A-O 159 754 (Morrison) the off-flavour substances are removed from the secondary extract of the instant coffee process by means of steam distillation. The 95 % removal of furfural - allegedly an off-flavour indicator - was quoted as evidence of the efficiency of this process.

The disadvantage with all known processes is that the flavour quality of the soluble coffee prepared in this way is still not satisfactory.

The aim of the invention is to make available a process for preparing a soluble coffee whereby it is possible to remove even more effectively the off-flavour substances some of which are present in the aqueous extracts.

It was found that this aim can be achieved by employing an extraction technique using supercritical or liquid carbonic acid at high pressure. The invention relates to a process for preparing a soluble coffee wherein for eliminating off-flavour substances from coffee extract, roast coffee is subjected to an at least two-stage aqueous extraction carried out under different temperatures increasing from stage to stage characterized in that the extract obtained in the second extraction stage or part of it and every extract obtained in an additional extraction stage are extracted at temperatures of approximately 20 to 120°C and at a pressure of approximately 60 to 400 bar with supercritical or liquid CO₂.

The invention further relates to a process for preparing soluble coffee according to the above described process wherein to separate and obtain valuable aroma constituents, roast coffee is firstly treated with steam, the remaining roast coffee then subjected to the at least two-stage aqueous extraction including treating the second extract and any further extract according to the process of claim 1, the optionally concentrated extracts are combined and reacted with the aromas and the obtained extract is freeze- or spray-dried in the usual way. The process is preferably carried out at a temperature of 60 to 90°C and a pressure of 80 to 160 bar.

It is known that, for the removal of caffeine, aqueous coffee extract solutions can be subjected to a CO₂ extraction. Thus, EP-A-O 010 637 (Margolis) describes a process for decaffeinating an aqueous roast coffee solution with supercritical carbonic acid of 450 bar at 80 °C, the CO₂ extraction taking place in a packed column. The same effect is described in US-A-4 341 804 (Prasad, Gottesman and Scarella), the decaffeination of the liquid extract taking place in an extractor provided with screen trays. US-A-4,246,291 (Prasad et al.) describes a process for decaffeinating aqueous coffee extracts with liquid or supercritical CO₂. EP-A-O,389,747 (Hubert) describes fluid extraction with carbonic acid with the aim of decaffeinating the aqueous roast coffee solution, the aqueous extract being added into the separation column at various heights by means of injection nozzles to the upwardly flowing compressed CO₂.

Therefore, the process according to the invention - insofar as the simultaneous extraction of the caffeine is not desired - can only be applied to the extract occurring during a second extraction stage because in the first extraction stage practically all the caffeine goes into solution.

It is surprising that the off-flavour substances can be removed with the aid of liquid or supercritical carbonic acid at high pressure. It was previously the view that the substances negatively influencing the flavour of the soluble coffee were those of average polarity which could be extracted with carbonic acid only with difficulty. The fact that they can nevertheless be extracted with carbonic acid indicates that they are lipophilic substances. Using gas-chromatographic mass spectrometric analyses it was confirmed that products to be found as off-flavour substances in the CO₂ phase include 2-hydroxy-alkyl-cyclopentene-1-one, which display strongly spicy characters.

For the preparation of a high-quality soluble coffee in an economic yield, it is necessary to improve the taste of coffee extracts which are obtained for increasing the yield and correspondingly subjected over a lengthy period of time to an increased temperature. This applies in particular to the secondary and tertiary extracts. As previously mentioned, attempts were made in the prior art to remove the off-flavour substances contained in these extracts with weakly basic ion exchangers, polymeric resin and the like. The result, however, was not satisfactory. With the process according to the invention, i.e. by means of a high-pressure extraction of the secondary extract or of part of the secondary extract and of every further extract with liquid or supercritical CO₂, the off-flavour substances can removed very effectively, and a soluble coffee with virtually roast coffee quality is obtained.

With the process according to the invention, ground roast coffee is preferably firstly stripped with steam in the usual way to separate essential aroma constituents. There follow a first and then a second extraction of the remaining roast coffee, which can likewise be carried out in the usual way as per the prior art. Aroma stripping and aqueous extractions can, for example, be carried out as described in EP-A-O 097 466, US-A-4 707 368 or EP-A-0 489 401.

The extract obtained during the second extraction, which is carried out at higher temperatures than the first extraction, containing off-flavour substances, is completely or partly subjected to the CO₂ extraction according to the invention. The same happens with the extracts obtained in additional extraction stages. The extraction is carried out in an extraction column in counter-flow. The coffee extract solution containing off-flavour substances is fed into the upper region of the column and removed in the lower column region. Liquid or supercritical CO₂ as extraction agent is fed in at the lower end of the column. The off-flavour substances dissolve in the fluid phase and are discharged at the upper column end with the carbonic acid. Suitable CO₂ extraction plants are described, for example, in DE-A-29 05 078, the whole disclosure of which is intended to be encompassed here.

Through suitable internals (Sulzer packing) an intensive exchange between the extraction agent CO₂ and the extract is achieved, so that the coffee extract solution emerging at the lower end of the column is free from off-flavour substances. This solution can then be processed in the known way with other part fractions from the instant procedure, to produce dry powder.

The off-flavour substances can be separated from the CO₂ by lowering the pressure to 20 to 200 bar in a separator provided for the purpose or by adsorption onto suitable adsorbents, such as, e.g., ion exchangers, activated carbon or molecular sieves.

The process of extracting the off-flavour substances from the coffee extract solution and the regeneration of the CO₂ is a recycling process. By means of a pump, the carbonic acid loaded with the off-flavour substances is guided over an activated-carbon column or other suitable column, such as e.g. a molecular sieve or an ion exchanger column, for the removal of the off-flavour substances. The regenerated CO₂ can then be used once more for extracting off-flavour substances from coffee extract solutions.

Using this treatment, 1 to 15 % IC-typical, undesired coffee constituents, relative to the quantity of extract used, are extracted and discarded. After this treatment, the raffinate obtained is virtually completely free from the off-flavour substances.

### Example

32 l secondary extract with a solids concentration of 5 %, which had been obtained in the usual way in the second stage of a two-stage extraction, were extracted in a CO₂ pressure-extraction column (Sulzer packing 13 BX) with a diameter of d = 300 mm and a length/diameter ratio of 20:1 in counter-flow, with CO₂ as extraction agent at a temperature of 70 °C and a pressure of 120 bar for a period of 30 to 40 min.

The off-flavour substances were separated from the CO₂ by lowering the pressure to 50 bar. The proportion of the extracted substances, relative to the quantity of extract used, was 5 %.

The thus treated extract was concentrated in the usual way in a multi-stage evaporator to a solids concentration of 48 % and cooled to 8 °C.

Subsequently, the treated secondary extract together with the primary extract and the obtained aromas were further processed in the usual way by freeze- or spray-drying to produce soluble coffee powders.

IC typical, undesired flavour characters were no longer ascertainable.

## Claims

1. Process for preparing a soluble coffee wherein for eliminating off-flavour substances from coffee extract, roast coffee is subjected to an at least two-stage aqueous extraction carried out under different temperatures increasing from stage to stage characterized in that the extract obtained in the second extraction stage or part of it and every extract obtained in an additional extraction stage are extracted at temperatures of approximately 20 to 120°C and at a pressure of approximately 60 to 400 bar with supercritical or liquid CO₂.

2. Process according to claim 1 wherein to separate and obtain valuable aroma constituents, roast coffee is firstly treated with steam, the remaining roast coffee then subjected to the at least two-stage aqueous extraction including treating the second extract and any further extract according to the process of claim 1, the optionally concentrated extracts are combined and reacted with the aromas and the obtained extract is freeze- or spray-dried in the usual way.

3. Process according to claims 1 or 2, characterized in that the CO₂ extraction is carried out at a temperature of 60 to 90 °C.

4. Process according to at least one of claims 1 to 3, characterized in that the CO₂ extraction is carried out at a pressure of 80 to 160 bar.

## Patentansprüche

1. Verfahren zur Herstellung eines löslichen Kaffees, bei welchem man zur Entfernung von Off-Flavour-Substanzen aus dem Kaffee-Extrakt Röstkaffee einer wenigstens zweistufigen wässrigen Extraktion unterzieht, die unter unterschiedlichen Temperaturen, die von Stufe zu Stufe zunehmen, durchgeführt wird, dadurch gekennzeichnet, daß man den in der zweiten Extraktionsstufe erhaltenen Extrakt oder einen Teil davon und jeden in einer zusätzlichen Extraktionsstufe erhaltenen Extrakt bei Temperaturen von etwa 20 bis 120°C und einem Druck von etwa 60 bis 400 bar mit überkritischem oder flüssigem CO₂ extrahiert.

2. Verfahren nach Anspruch 1, bei welchem man Röstkaffee zur Abtrennung und Gewinnung von wertvollen Aromabestandteilen zunächst mit Wasserdampf behandelt, den verbliebenen Röstkaffee dann einer mindestens zweistufigen wässrigen Extraktion unterzieht, einschließlich der Behandlung des zweiten Extraktes und jedes weiteren Extraktes gemäß dem Verfahren nach Anspruch 1, die gegebenenfalls eingeengten Extrakte vereinigt und mit den Aromen versetzt und den erhaltenen Extrakt auf übliche Weise gefrier- oder sprühtrocknet.

3. Verfahren nach den Ansprüchen 1 oder 2, dadurch gekennzeichnet, daß man die CO₂ Extraktion bei einer Temperatur von 60 bis 90°C durchführt.

4. Verfahren nach mindestens einem der Ansprüche 1 bis 3, dadurch gekennzeichnet, daß man die CO₂-Extraktion bei einem Druck von 80 bis 160 bar durchführt.

## Revendications

1. Procédé de préparation d'un café soluble, dans lequel, pour éliminer les substances nuisant à l'arôme du café de l'extrait de café, le café torréfié est soumis à une extraction aqueuse à au moins deux stades, réalisée à différentes températures augmentant de stade en stade, caractérisé en ce que l'extrait obtenu dans le second stade d'extraction, ou une partie de celui-ci, et chaque extrait obtenu dans un stade d'extraction supplémentaire, sont extraits à des températures d'approximativement 20 à 120 °C et à une pression d'approximativement 60 à 400 bars, avec du CO₂ supercritique ou liquide.

2. Procédé selon la revendication 1, dans lequel pour séparer et obtenir des constituants d'arôme valable, le café torréfié est d'abord traité à la vapeur d'eau, le café torréfié restant est ensuite soumis à l'extraction aqueuse à au moins deux stades incluant le traitement du second extrait et de tout extrait ultérieur selon le procédé de la revendication 1, les extraits facultativement concentrés sont combinés et on les fait réagir avec les arômes, et l'extrait obtenu est lyophilisé ou séché par pulvérisation de la manière usuelle.

3. Procédé selon les revendications 1 ou 2, caractérisé en ce que l'extraction au CO₂ est réalisée à une température de 60 à 90 °C.

4. Procédé selon au moins l'une des revendications 1 à 3, caractérisé en ce que l'extraction au CO₂ est réalisée à une pression de 80 à 160 bars.
